# EUROPEAN PATENT SPECIFICATION

(11) **EP 1 277 367 B1**
(45) Date of publication and mention of the grant of the patent: **22.08.2007**
(21) Application number: 01921414.7
(22) Date of filing: 29.03.2001
(51) Int. Cl.: H04Q 7/38, H04L 12/56

(54) **HANDOVER IN A WIRELESS MOBILE-IP NETWORK**
WEITERREICHUNG IN EINEM DRAHTLOSEN MOBIL-IP-NETZWERK
PROCEDE DE TRANSFERT DANS UN RESEAU MOBILE SANS FIL DE PROTOCOLE INTERNET

(30) Priority: 31.03.2000 FI 20000753
(43) Date of publication of application: 22.01.2003
(73) Proprietor: Nokia Corporation, 02150 Espoo (FI)
(72) Inventor: XU, Lin, FIN-33880 Lempäälä (FI); PAILA, Toni, FIN-10160 Degerby (FI)
(74) Representative: Virkkala, Jukka Antero
(86) International application number: PCT/FI2001/000308
(87) International publication number: WO 2001/074108

(56) References cited:
- EP-A1- 1 009 141
- WO-A1-99/27657
- WO-A1-99/27718

## Description

### Background of the invention

The invention relates to traffic management in a multi-bearer packet data network. A multi-bearer network, or an MBN, is a network having the capability to carry a data packet via one of several alternative bearers. To be more precise, the term "multi-bearer network" should be interpreted as meaning "multi-bearer-type network", or in other words, a network arrangement which provides multiple different bearer types for data packet delivery. An example of an MBN is a concept known as MEMO (Multimedia Environment for Mobiles), see reference 1. Additionally, the MBN supports mobility of a subscriber terminal. An example of terminal mobility is IP (Internet Protocol) mobility, which is the topic of standard RFC2002 and Internet Draft *"*Mobility Support in IPv6", by C. Perkins and D. Johnson, dated 28 October 1999 by the internet Engineering Task Force (IETF). The network layer protocol to be used in the invention, IPv6, is described in documents RFC-2460: *"Internet Protocol, Version 6 (IPv6) Specification"* and RFC-2373: *"IP Version 6 Addressing Architecture,"* The status of these Internet drafts is "work in progress". Documents WO 99/27718 and WO99/27657 describe handover in a cellular mobile network.

A generic problem underlying the invention is that the MEMO concept is very limited. It only contemplates one uplink bearer type, namely GSM (Global System for Mobile Communication), and one downlink bearer type, namely DAB (Digital Audio Broadcast). Within the context of this application, 'uplink' means from the mobile node MN to the correspondent node CN and 'downlink' means the inverse direction.

Expanding the MEMO concept to multiple alternative uplink and/or downlink bearer types causes more specific problems. One of the specific problems is how to select an optimal bearer for each data packet in varying situations in an MBN. Data packets have different quality-of-service requirements. Situations may vary because the subscriber moves or the network load changes. Another specific problem is how to route the traffic to the mobile node via the selected bearer and to design suitable network elements and MBN architecture. Solutions to the above specific problems are disclosed under "MBN architecture", later in this specification.

### Disclosure of the invention

The object of the invention is to provide methods and equipment for solving the specific problem related to bearer selection in an MBN during a handover. In other words, the object of the invention is to provide a handover mechanism for an MBN.

This object is achieved with a method and equipment which are characterized by what is disclosed in the attached independent claims. Preferred embodiments of the invention are disclosed in the attached dependent claims. The invention is applicable in any wireless mobile-IP network but maximum benefits are obtained if the invention is used in an MBN comprising multiple different radio bearer networks. Accordingly, a preferred MBN architecture is described first.

The MBN architecture is based on a novel distribution of functions within an MBN. The functions are distributed over four major nodes or node sets. In addition, the MBN comprises a physical or virtual backbone network (BB). A first node set, called access control nodes, grants or rejects user rights within the MBN. This set also stores subscriber preference information.

A second node set, called home administration nodes (HAN), comprises a home registration unit (HRU) for storing subscriber registration and preference information, such as access right information. For instance, a subscriber may be a national subscriber and not pay for any roaming support. Another user may elect roaming support in major European cities. The available options depend entirely on the service providers. The HAN node set also comprises an MBN home agent (MHA), which is a special version of a home agent. It supports a mobile node that uses an MBN-specified IP address as its home addresses. Each MN subscriber which is registered for MBN service has an entry in the HRU of the home network. An MBN serves its subscribers regardless of which IP address is used as the mobile node's home address for communicating with the correspondent node.

A key concept in the mobile-IP protocol is the home agent (HA). For each mobile node, there is one home agent. The home agent is a routing entity in a mobile node's home network which tunnels packets for delivery to the mobile node when it is away from its home network, and maintains current location information for the mobile node. The home agent per se is known to the skilled reader. But the invention is also partially based on the idea that the home agent function is supplemented with a home register unit (HRU) which is a separate entity from the home agent. Separating the home register unit from the home agent allows more freedom in positioning the home agent. In other words, the home agent can be located virtually in any network, and the mobile node can use its own IP address instead of the one provided by the MBN. Thus a mobile node is allowed to use either an IP address provided by the MBN or an IP address provided by some other network. If the mobile node uses an MBN-provided IP address as its home address for communicating with its correspondent node, the MHA acts as the mobile node's home agent. If the MN uses an IP address provided by eg a corporate network, the home agent in that network is the mobile node's home agent.

A third node set, called service support nodes (SSN), is in charge of centralized traffic policy control, mobility management and resource reservation decisions. The SSN node set also controls starts of sessions and routes the first packet(s) of new sessions. Normally the SSN node set does not route subsequent packets of ongoing sessions. Instead, the mobile node updates its mobility binding with its correspondent node, after which the traffic bypasses the SSN nodes. For some reason, a mobile node may not want to send a mobility binding update message. In this case, the SSN nodes route all traffic to the mobile node.

The service support nodes (SSN) comprise a traffic policy controller (TPC) within the backbone network. Later in this application, the traffic policy controller is frequently shortened to "traffic controller". The traffic (policy) controller makes centralized routing policy decisions but does not route all packets itself. It only routes the first packet or the first few packets of a new session and helps other network elements to communicate directly with each other. The SSN nodes also comprise a resource coordination unit (RCU) from which the TPC checks resource availability before making decisions about traffic allocation. The traffic controller also requests the resource coordination unit to reserve resources for a flow when necessary (for guaranteed service). Moreover, the traffic controller selects a downlink bearer on the basis of traffic flow or/and traffic class. The SSN node set also comprises a mobility management unit (MMU) which supports the mobile node in handovers within a TPC area and between two TPC areas.

The TPC, RCU and MMU are preferably closely coupled or within the same network element. This means that the mobile node is not burdened with addressing these functions separately. Instead, these functions share a common IP address, and the MN communicates with the TPC which distributes MN-originated information with the RCU and the MMU.

Each traffic policy controller (TPC) has an area of responsibility. Such an area will be called a TPC area. The TPC area comprises the cells broadcasting the TPC's IP address or another unique TPC identifier. Because the cell size varies and the cells are partially overlapping, the TPC area has no clearly-defined geographical border, and a mobile node may be located geographically in two or more neighbouring TPC areas simultaneously. However, the mobile node can be registered with (ie reachable via) one TPC at any time. In such a situation, the mobile node selects the TPC controlling the cell with the best signal quality. Moreover, the area of a certain TPC is likely to be different between the various bearer networks. In other words, the TPC area for DVB is different from the TPC area for DAB.

A fourth node set, called interface units (IU), acts as interfaces to the various bearer networks. The primary function of the interface units is to encapsulate IP packets into protocols suitable for the bearer network in question, and to control incoming traffic to a bearer network or a broadcast cell. The interface unit of a broadcast cell also monitors and controls the resource usage and reports resource availability to the SSN nodes.

Each interface unit (IU) toward the broadcast bearer networks comprises or is closely coupled to a resource management unit (RMU). The RMU controls the physical resource allocation in each cell under it. It also acts as a peer entity of the resource coordination unit to respond to resource allocation requests. More specifically, the RCU makes decisions concerning resource allocation but the RMU maps each data flow to one or more physical or logical channels of the specific broadcast station.

The bearers include a first set of bidirectional bearers. Examples of bidirectional bearers are circuit-switched mobile networks, such as GSM (Global System for Mobile communications), and packet-switched mobile networks, such as GPRS (General Packet Radio Service), and third generation mobile networks, such as UMTS (Universal Mobile Telecommunications System), which offer both circuit-switched and packet-switched bearers. The bearers also include a second set of unidirectional bearers. Examples of unidirectional bearers are digital audio broadcast (DAB) and digital video broadcast (DVB). The set of unidirectional bearers can also be called broadcast bearers, and the set of bidirectional bearers can also be called non-broadcast bearers.

A multi-bearer network according to the invention comprises a backbone network which is preferably based on IPv6 (Internet Protocol version 6) with mobility support. The backbone network has border gateway nodes towards the Internet and interface units (IU) towards the various bearer networks.

The MBN architecture provides mobility support in an MBN in an elegant manner. There is a first set of centralized access control nodes, a second set of centralized traffic (policy) control nodes and a third set of interface nodes for each bearer network. The mobile node and its correspondent node are not burdened with addressing each node or functionality separately. To access services within the MBN, the mobile node is only required to have some rights in one bidirectional (uplink) bearer network.

### Brief description of the drawings

The invention will be described in more detail by means of preferred embodiments with reference to the appended drawing wherein:
Figure 1 is a block diagram illustrating an overall network architecture;
Figure 2 illustrates addressing within the MBN;
Figure 3 shows a traffic handling policy table THPT;
Figure 4 shows a mapping table QMTC for mapping QoS (Quality of Service) in a packet's IP header into a traffic class within the MBN;
Figure 5 shows a list ACAL of the mobile node's available care-of address;
Figure 6 is a signalling diagram illustrating registration and resource reservation;
Figure 7 is a signalling diagram illustrating the start of a session;
Figures 8A to 8C illustrate a an intra-SSN handover;
Figures 9A to 9C illustrate an inter-SSN handover;
Figure 10A illustrates a special case in which the MN does not register its updated mobility binding with the CN; and
Figure 10B illustrates the final steps of an inter-SSN handover.

### Detailed description of the invention

### MBN architecture

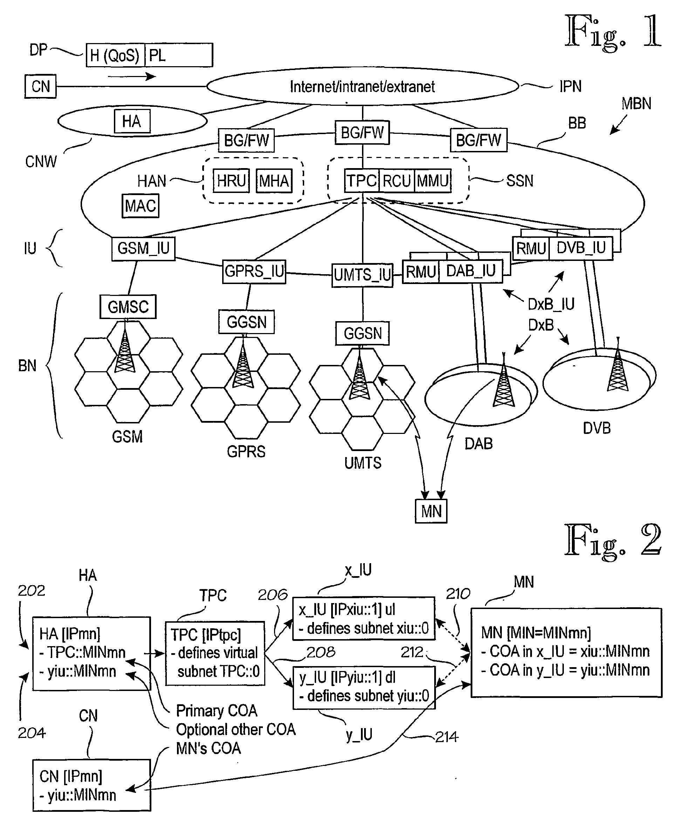

Figure 1 is a block diagram illustrating an overall network architecture. Reference sign MN denotes the mobile node. Reference sign CN denotes the mobile node's correspondent node, which is a host or server the mobile node is communicating with. The mobile node MN communicates with its correspondent node CN via a multi-bearer network MBN which offers several alternative bearers for a data packet DP. The MBN comprises a physical or virtual backbone network (BB). The mobile node MN is able to communicate with several bearer networks BN. The bearer networks comprise at least one bidirectional bearer network (in this example: GSM, GPRS or UMTS) and at least one unidirectional or broadcast bearer network (in this example: DAB and DVB). The DAB and DVB are commonly referred to as DxB. The DxB networks are the principal bearers for downlink traffic. The mobile node uses the bidirectional (uplink) bearers primarily for accessing the services of the MBN, although some bidirectional bearers, most notably the UMTS, can be used for downlink traffic with a moderately high speed. For clarity, the bearer networks are shown as distinct in Figure 1, but in reality they are geographically overlapping, and a mobile node may have access to all bearer networks at the same time. The bearer networks BN per se are known to the skilled reader, and especially the bidirectional bearer networks can be largely treated as black boxes.

Each data packet DP comprises a header H and a payload part PL. To be precise, a data packet typically has several headers inside each other, because each protocol layer inserts its own header. However, each protocol layer only handles its own header, and a model with only one network layer header is usually sufficient for describing the invention. The header indicates, directly or indirectly, a quality-of-service requirement QoS for the data packet. An example of a direct QoS indication is a case where a data packet header includes a parameter which is or which can be directly mapped to a quality-of-service requirement parameter. An example of an indirect QoS indication is a case where a (Transmission Control Protocol) data packet header indicates a port number which in turn indicates the QoS requirement. It should be understood that'quality of service' is a very generic term indicating certain requested or negotiated transmission characteristics, such as bit rate, maximum delay and/or packet loss probability. Depending on the actual protocol used, quality of service is indicated by or mapped to one (or more) of the existing appropriate fields, such as the Traffic Class field of IPv6. The term 'traffic class' is used to refer collectively to the fields which are used to indicate the quality-of-service requirement.

In the arrangement shown in Figure 1, the MBN communicates with the CN via an IP Network IPN, such as the Internet or an intranet/extranet. A border gateway node BG interfaces the MBN to the IP network IPN. The border gateway BG is typically a simple (but sufficiently powerful) router which preferably includes a firewall function FW. A backbone network BB combines the different bearer networks BN. The backbone network may be the MBN operator's internal network. A physical example of a backbone network is a highspeed local-area network or a wide-area network. The backbone network BB is based on IPv6 (Internet Protocol version 6) or a later version, with mobility support.

In a system as shown in Figure 1, the access control node set is implemented as an MBN authentication centre MAC, which provides centralized grant or denial of the mobile node's rights to services via the backbone network BB. The MAC also stores subscriber preference information related to the mobile node.

A second node or node set, called HAN (home administration nodes), supplements the mobile IP home agent function. The HAN nodes comprise a home registration unit (HRU) for storing subscriber registration and preference information, such as access right information. The HAN nodes also comprise an MBN home agent (MHA), which is a special version of the home agent. Separating the home register unit from the home agent allows more freedom in positioning the home agent. The home agent can be located virtually in any network, and the mobile node can use its own IP address instead of the one provided by the MBN. Accordingly, in the example shown in Figure 1 the home agent HA of the mobile node MN is in the MN's corporate network CNW.

The home agent HA is a key concept in the mobile-IP protocol. For each mobile node, there is one home agent. The home agent is a routing entity in a mobile node's home network which tunnels packets for delivery to the mobile node when it is away from its home network, and maintains current location information for the mobile node. It tunnels datagrams for delivery to, and detunnels datagrams from, a mobile node when the mobile node is away from its home network.

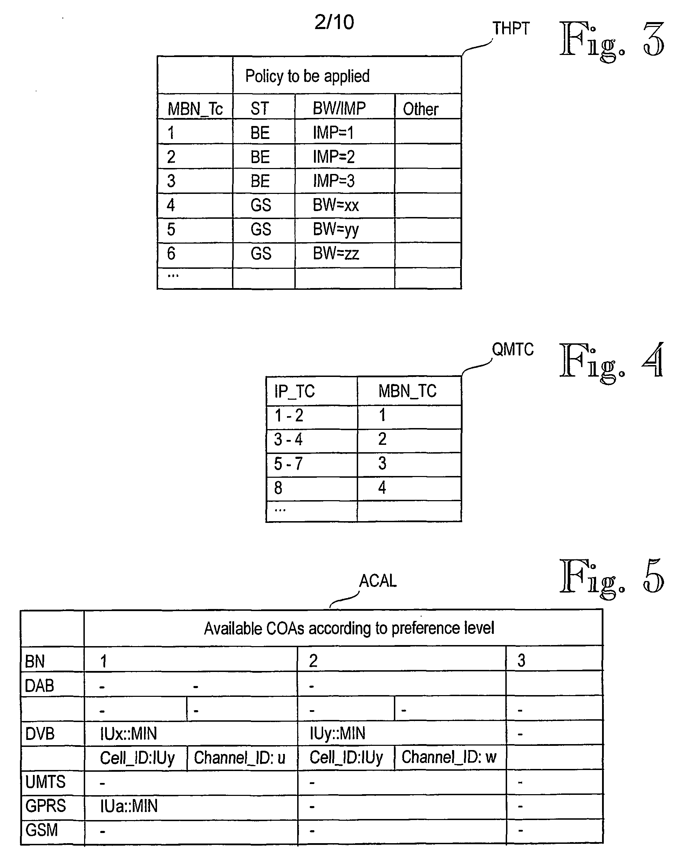

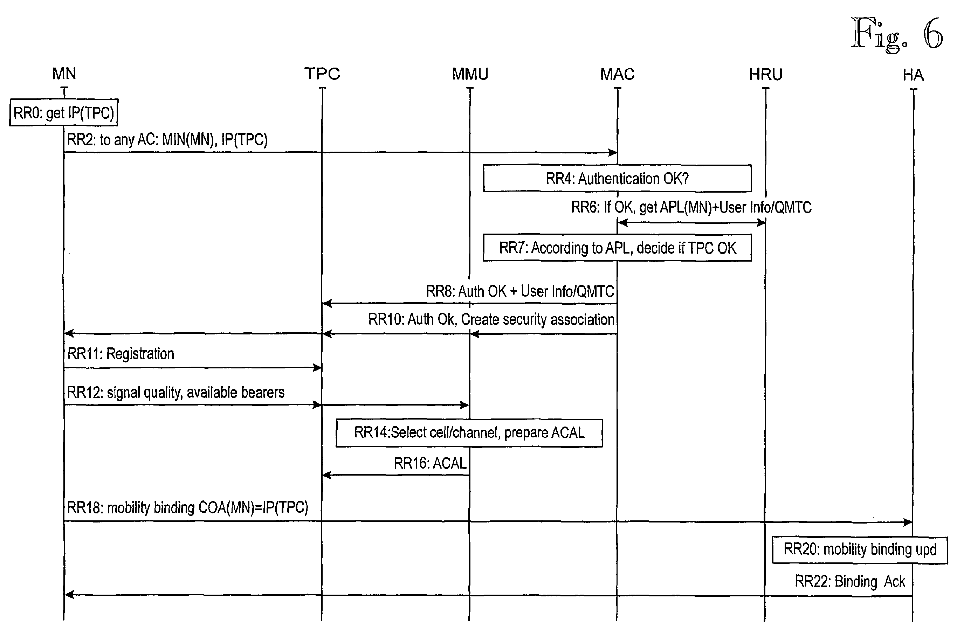

The home register unit HRU stores the user registration information, such as an Access Permission List (APL, see Figure 6) which indicates the MN's rights in each BN. The HRU also stores the subscriber's preference information, which indicates what quality of service the subscriber requires from various applications (or for specific incoming traffic classes). An example of such preference information is the QMTC table shown in Figure 4. The HRU of a visiting MN may be located in a different MBN. In such a case, the HRU of the visited MBN may consult the HRU of the MN's home MBN. If the traffic handling policy of the MN's home network differs from the policy of the visited network, the HRU should adapt the preference information accordingly, such that the user receives the expected quality of service.

A third node set, called SSN (service support nodes), provides centralized administration and distribution of traffic policies (see Figures 3 and 4). The SSN node set combines the MN-specific subscriber preference information and operator-specific policy information into an MN-specific traffic handling policy which the SSN node set used to make decisions concerning cell and/or channel selection. The MN-specific traffic handling policy is also distributed to the interface nodes which route the packets of ongoing sessions. It may route the first data packet(s) of new sessions but does not route subsequent data packets of ongoing sessions if the MN sends its updated mobility binding information to the CN. The traffic control node set also supports centralized mobility management for managing the mobility of the mobile node within the downlink bearer networks DxB, and it makes centralized resource reservation decisions within the downlink bearer networks. In the arrangement shown in Figure 1, the SSN node set comprises a traffic (policy) controller TPC. Each traffic controller comprises or is closely coupled to a resource coordination unit RCU and a mobility management unit MMU.

A fourth node set, called interface units IU, acts as interfaces to the bearer networks BN. The IU nodes also carry out the resource reservation decisions in the downlink bearer networks DxB. In Figure 1, the interface units are labelled xx_IU, where 'xx' is the relevant bearer network. More precisely, the backbone network BB preferably has one (or more) interface unit towards each bearer network having inherent mobility support (GSM, GPRS and UMTS) and one interface unit towards each cell in a bearer network not having inherent mobility support (DxB). Each DxB interface unit comprises or is closely coupled to a resource management unit (RMU).

The mobile node MN must be able to communicate with several bearer networks BN. It implements IPv6 with mobility support. It monitors selected links (physical channels of DxB) for router advertisement messages. Thus it gains knowledge of the various routers within the MBN. The MN has a unique MIN number (MBN interface number) for automatic care-of address configuration. The MN is able to send an authentication message for registering with the backbone network BB via an interface unit IU of a bidirectional BN, the IU consequently forwarding the authentication request to the MBN authentication centre MAC. The mobile node is able to initiate a binding update procedure for registering its own location information with its home agent HA and the correspondent node CN.

The mobile node is also able to edit its mapping from IP Quality of Service (QoS) to MBN Traffic Class (MBN_TC, see Figure 4). An example of a QoS-to-MBN traffic class mapping is as follows. When users enter or update their subscriptions, they can select their QoS and MBN_TC mappings. The MBN operator can provide several mapping tables, each of which corresponds to a different price or tariff. The user selects one mapping table. Later on, the user may modify the mapping table (by calling the operator), access and modify its profile (eg via a web/wap browser or by using special software). Once the mapping is changed, the charging method will be changed accordingly. The traffic controller TPC uses such mappings as a basis for determining the specific xx_IU unit via which a given kind of traffic is conveyed.

Figure 2 illustrates a general addressing concept within the MBN. IPv6 employs two types of care-of addresses (COA): a primary COA and a co-located COA. Because of the addressing structure of IPv6, there is usually no need to have separate foreign agents for mobility support (in contrast to IPv4), and the COAs are co-located COAs. A mobile node may have multiple COAs, and a single home agent may store more than one COA for one mobile node. But at any one time, only one COA is registered as the primary COA to which the home agent tunnels MN-terminated data.

The home agent HA knows the care-of address associated with the traffic controller TPC. Preferably, the mobile node's primary COA is the subnetwork prefix of the TPC plus the MN's MIN. An advantage of this addressing scheme is that the TPC is able to see the MN's address and route the data to its final destination even if the HA encrypts MN-terminated tunnelled data.

According to a preferred feature of the invention, the primary COA registered in the home agent is associated with the traffic policy controller TPC. In other words, the COA's prefix is the TPC's subnetwork prefix and the last part is the mobile node's own MIN. The TPC acts as a router for the traffic heading toward the COA. The COA stored in the CN is associated with the relevant interface unit IU. This address allocation trick forces the traffic to be routed via the TPC during the start of a session, and allows traffic routing directly via the selected IU during the remainder of the session. The MN and the CN may open a second session in parallel to the first session. The data packets of the parallel session may be routed directly to the MN via the IU if no resource reservation is needed.

In the example shown in Figure 2, the home agent HA maintains the primary COA 202 of the mobile node MN. The primary COA 202 is the IP address 202 of the traffic controller TPC used by the MN. Optionally, the HA may also store the IP address 204 of the MN within the subnetwork under the downlink interface unit currently used by the MN. In this example, there are two possible downlink interface units x_IU and y_IU, of which y_IU is selected. The traffic controller TPC maintains the IP address 208 of the downlink interface unit y_IU currently used by the MN and the IP address 206 of another downlink interface unit x_IU. The downlink interface units in turn maintain the mobile node's COA (210 and 212) in each respective subnetwork.

During the start of a session, the first packet is routed by using the addresses 202, 208 and 212. As soon as the correspondent node CN registers the MN's new mobility binding, subsequent packets are routed by using the mobile node's COA 214 within the subnetwork defined by the downlink interface unit y_IU.

Figure 3 shows an example of a traffic handling policy table THPT. For each MBN Traffic Class (MBN_TC), the THPT defines the traffic handling policy to be applied. The THPT can be similar or different between different MBN networks. Column ST indicates the service type of the traffic class. In this context, "service type" is a generic term and not a name of a field in an IPv4 packet header. The possible values are "best effort" (BE) and "guaranteed service" (GS). (In a radio network, however, "guaranteed" must be read as "guaranteed if possible"). BW means bandwidth (measured by some appropriate and sufficient metrics), and IMP means importance. Low-importance data packets are discarded first if sufficient bandwidth is not available. The column marked "other" can be used for example to implement policies with time dependant validity. This means that daytime priorities can be different from nighttime priorities.

Figure 4 shows an example of a mapping table QMTC for mapping QoS in a data packet's IP header into a traffic class within the MBN (QMTC = QoS to MBN_TPC). This table is subscriber-specific and maps IPv6 traffic classes IP_TPC into MBN traffic classes MBN_TPC. The traffic class in question is indicated by the packet's header.

Figure 5 shows an example of a list ACAL of the mobile node's available care-of address (ACAL = Available Care-of Address List). For each mobile node, there is a corresponding ACAL table which lists, in decreasing order of preference, alternative available care-of addresses in each available downlink bearer, cell or channel. In the example shown in Figure 5, there are two available care-of addresses for DVB (downlink) and one for GPRS (uplink). SPx is the subnetwork prefix of subnetwork x, and MIN is the MBN interface number for the mobile node. The mobile node continuously measures signal strength (or some other signal quality parameter, such as the bit error ratio) of each available broadcast channel. It sends the measurement results to the mobility management unit MMU, which maintains a list of channels having an acceptable signal quality. Then the MMU translates this list into a list of care-of addresses wherein each channel corresponds to a combination of the relevant subnetwork prefix and the mobile node's care-of address. Then the MMU arranges the ACAL list according to preference (signal quality) and sends the ACAL list to the traffic controller TPC. It is the traffic controller's responsibility to make the final decision concerning the care-of address to be used. Three example situations illustrate the decision-making process.

In the first situation, the mobile node is powered on but does not receive data from any CN. When the first packet arrives from a CN, the packet is tunnelled by the HA to the MN's COA associated with the TPC. The TPC, acting as a default router, receives the packet and makes the cell/channel decision on the basis of the ACAL list. After making the decision, it pages the MN, builds a routing path to the MN via the selected IU, and routes the packet via the IU to the MN. The TPC also informs the MMU about the decision so that the MMU can monitor the signal quality (strength) of the active cell and make appropriate handover decisions.

In the second situation, there is an ongoing session and the mobile node is moving from one place to another. This move requires the ACAL list to be changed. The MMU updates the ACAL list. If the MMU determines that a handover is necessary, it sends the TPC a request to select a new cell on the basis of the new ACAL. In this case too, the TPC informs the MMU about the decision, and the MMU assists the MN to complete the handover.

In the third situation, a resource changes. Accordingly, the MN may have to be handed over to another cell/channel. In this case, the TPC makes the decision on the basis of the ACAL and instructs the MMU to perform the rest of the handover.

Figure 6 is a signalling diagram illustrating registration and resource reservation. Each MBN has a traffic handling policy table THPT (see Figure 3). In step RR0, the MN wants to initiate a registration process. The MN is assumed to have some rights in one uplink network, which in this example is the GPRS network. The MN has no rights yet in the broadcast networks, but it monitors the broadcast links to obtain the identifier or IP address of the traffic controller TPC which controls the area in question. In step RR2, the MN sends the authentication centre MAC an authentication request comprising the MN's MIN (MBN interface number) and the IP address of the TPC (obtained in the previous step). In step RR4, the MN is authenticated by the authentication centre MAC. The authentication process is the topic of a co-pending patent application filed on the same day as the present application. For the purposes of the present invention, it will suffice to say that after the authentication process, the MAC knows whether the MN is allowed to access this MBN. If the authentication is completed successfully, in step RR6 the MAC consults the home registration unit HRU to obtain the MN's Access Permission List APL, which indicates the MN's rights in each BN. The HRU of a visiting MN may be located in a different MBN. The TPC also negotiates with the HRU to obtain the subscriber's preferences, such as the QMTC table shown in Figure 4. In step RR7, the MAC decides whether the TPC is appropriate, considering the APL list. In step RR8, the MAC informs the TPC that the authentication was successful, and reports the subscriber preference information. In step RR10, the MN receives an indication that the authentication was completed successfully. Also, the MAC establishes a security association between the MN and the SSN (the TPC, MMU and RCU). For example, a session key may be distributed to the MN and the SSN. The session key allows encrypted communication between the MN and the SSN. In step RR11, the MN sends its address in the uplink and downlink bearer networks to the TPC. In step RR12, the MN reports the following information to the TPC, which passes it on to the MMU (which preferably shares the TPC's IP address): 1) signal quality of each available cell/channel in the broadcast network(s), and 2) available bidirectional bearers. In step RR14, the TPC/MMU selects the acceptable cell(s)/channel(s) in the broadcast network(s) and prepares the ACAL list (Available Care-of Address List, see Figure 5). In step RR16, the MMU gives the ACAL list to the TPC. In step RR18, the MN initiates a registration with its home agent HA by sending a mobility binding COA(MN) = COA(TPC-MN). In other words, the MN's COA within the HA is the COA associated with the TPC. In steps RR20 and RR22, the HA updates and acknowledges the MN's mobility binding. Any correspondent node CN may now reach the MN via its HA by sending a packet with the IP address of the MN.

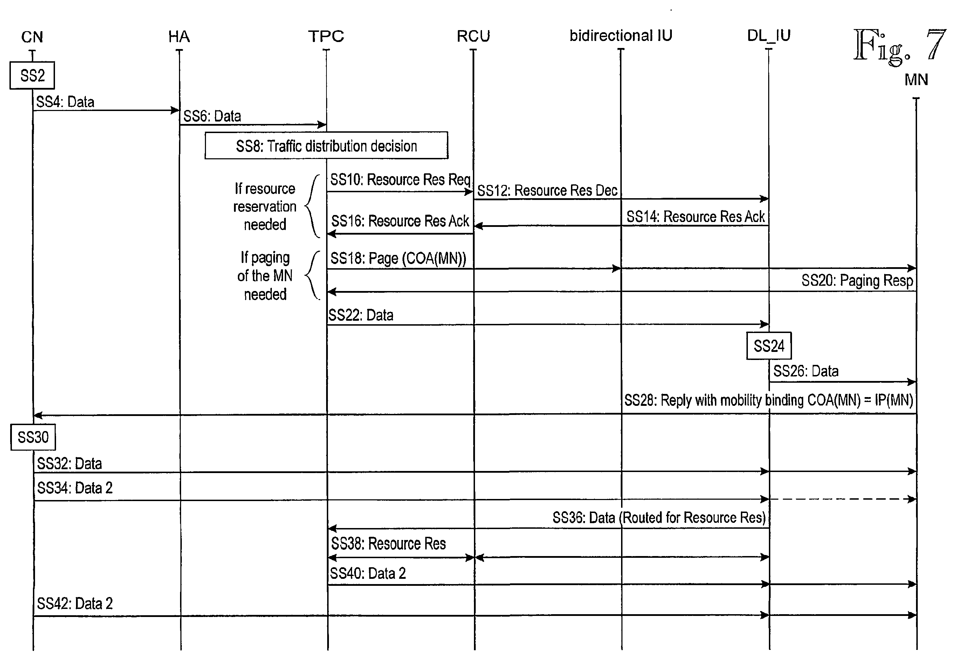

Figure 7 is a signalling diagram illustrating the start of a session. The set of events begins in step SS2 in which the MN's correspondent node CN knows the MN's IP address IP(MN). In step SS4, the CN does not know the mobility binding in the HA. Thus the first user data packet is routed to the HA. (In Figure 7, 'data' refers to data packets of session 1, and 'data 2' refers to data packets of session 2.) In step SS6, because the HA stores the TPC's IP address as the MN's primary COA, the packet is tunnelled to the TPC. In step SS8, the TPC uses the QMTC table to classify the incoming packet to its MBN traffic class. Next, the TPC uses the ACAL table (which combines the subscriber's preference, the MBN operator's traffic policies, and available traffic/resource information (resource availability data) obtained from the RCU) to select a downlink bearer.

Steps SS10 to SS16 relate to resource reservation, which the TPC performs only when necessary (for guaranteed service). Resource reservation is specific to the data flow. For example, if the data flow in question belongs to MBN traffic class 5, the TPC reserves a certain amount of bandwidth in the selected cell (under the COA indicated by the ACAL). In step SS10, the RCU preferably maintains a database (eg a fast look-up table) that indicates resource availability in all cells under the TPC, and in the neighbouring cells (for smooth handover). If the incoming traffic belongs to best effort service, the TPC selects the cell only on the basis of the resource availability table. If the incoming traffic belongs to guaranteed service, the TPC checks 1) if resource reservation has been performed, and 2) if not, how much bandwidth has to be reserved (based on the QMTC and THPT tables). By looking at the resource availability table, the TPC determines a suitable channel, but it requests the RCU to perform the actual channel reservation. In step SS12, the RCU makes a decision about resource reservation and sends the decision to the downlink interface unit DL_IU (in this example: a DVB interface unit). Steps SS14 and SS16 are the corresponding acknowledgements.

Steps SS18 and SS20 relate to paging the mobile node MN. If the MN is not active in the selected bearer or channel, it needs to be paged. In step SS18, the MN is paged via the uplink interface unit UL_IU (a GPRS interface unit in this example). Step SS20 is the paging response from the MN.

In step SS22, the first user data packet to the MN is forwarded to the downlink interface unit DL_IU. In step SS24, the DL_IU checks that the recipient's COA is authorized and the resource reservation is valid. In step SS26, the DL_IU forwards the first user data packet to the MN. In step SS28, the MN notices the incoming data packet from the CN and responds with a mobility binding of COA(MN) = COA(IU-MN). In other words, the COA is associated with the DL_IU. The subnetwork prefix is the same as with the DL_IU, and the second part of the address is the MIN. In step SS30, the CN updates the MN's mobility binding. In step SS32, the CN begins to send MN-terminated data packets directly to the DL_IU, thus bypassing the intervening elements (the HRU, the HA and the TPC). In reality, the CN may have sent more than one packet before receiving the MN's updated mobility binding in step SS28, in which case the TPC may have to route more than one packet to the MN.

In step SS34, if the same CN needs to open another session for the MN, and the new session requires best effort service (no resource reservation needed), the data of the new session is sent just like the data in step SS32 (the final step being shown by a dotted arrow). But if the new session requires guaranteed service (which in turn requires resource reservation), the first packet of the new session is routed from the DL_IU to the TPC, as shown in step SS36. In step SS38, the TPC performs resource reservation for the second session. This step comprises the detailed steps of SS10 to SS16. In step SS40, the first data packet of the second session is routed to the MN. In step SS42, subsequent packets of the second session are routed to the MN.

No explicit messages to end a session are needed. If there are no MN-terminated packets for a predefined time, the IU can simply delete the information related to the MN from its cache and inform the TPC about its action. The MN may maintain a similar timer. If it receives no packets before the timer expires, the MN stops monitoring the broadcast bearer for user data. If the MN is still expecting data when the timer is about to expire, the MN may request the IU to temporarily extend the time limit. The IU may accept or reject the request.

In order to save the battery of a portable mobile node, it is preferable that the mobile node monitor only one bearer type (network) at a time. For example, the subscriber data related to the mobile node can include a default bearer type, such as GSM or UMTS. The mobile node should be paged on this bearer. The mobile node can be ordered to monitor the selected bearer type by sending a modified page message which indicates the selected bearer type, channel, possible decryption data, etc. Alternatively, such information can be sent in a separate message, such as a data call or the like.

### Handover mechanisms

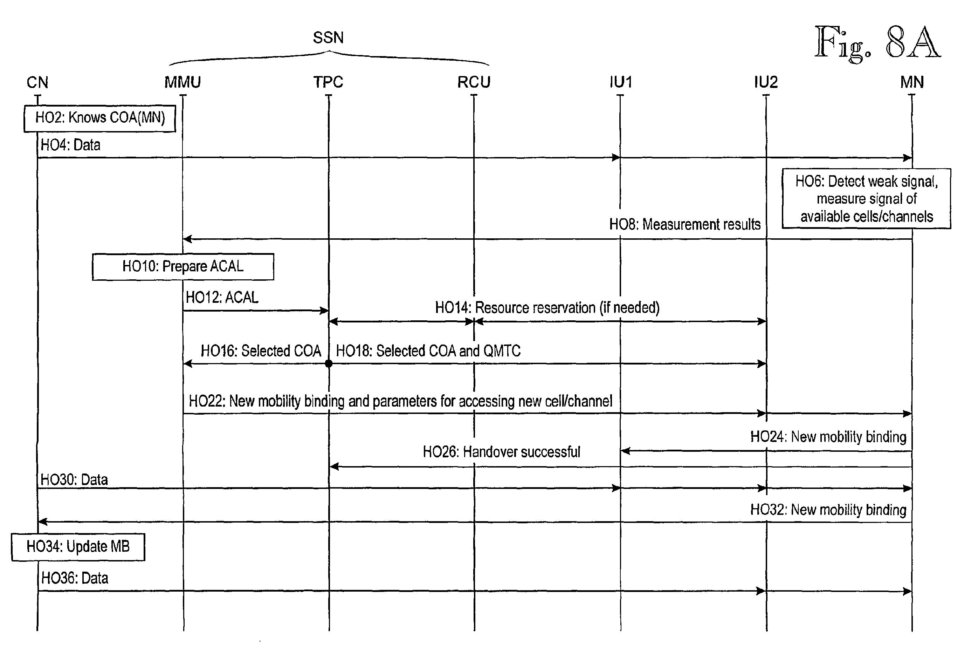

Figure 8A illustrates a handover in which the SSN node set (the TPC, MMU and RCU) does not change. Such a handover is called an intra-SSN handover. IU1 and IU2 are the mobile node's old and new downlink interface unit, respectively. In step H02, the correspondent node CN knows the COA of the MN. In step H04, a data packet is routed via the (old) IU1 to the MN. In step H06, the mobile node MN detects a weak signal strength in its currently serving cell. It measures the signal strength (or some other quality parameter(s)) of the available cells and channels. In step H08, the MN sends the measurement results to the MMU (which shares the IP address and routing software with the TPC). In step H010, the MMU decides which cell/channel combinations are acceptable and prepares the ACAL list, which it sends to the TPC in step H012 (cf. steps RR14 and RR16 in Figure 6). In step H014, resource reservation is performed, if necessary (cf. steps SS10 to SS16 in Figure 7). In step H016, the TPC reports the selected COA to the MMU. In step H018, the TPC reports the selected COA and the mapping information QMTC to the MN. In step H022, the MMU sends to the MN the new mobility binding information and parameters for accessing the new cell and channel. In step H024, the MN sends its updated mobility binding information to the old IU1, and in step H026, the MN reports the successful handover to the TPC, for example by sending its new mobility binding information in a standard IPv6 or proprietary message. In step H030, the CN sends the next MN-terminated data packet. It is routed to the old IU1, which routes it to the new IU2, which in turn routes it to the MN. In step H032, the MN sends its updated mobility binding information to the CN, which updates the MN's binding in step H034. In step H036, the CN sends the next data packet. It is routed via the new IU2 to the MN.

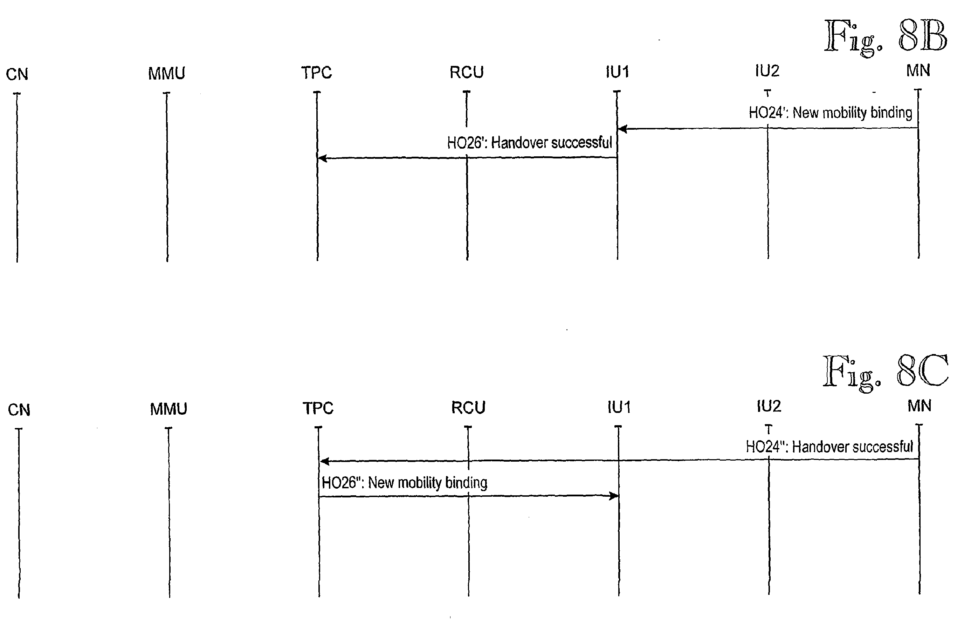

Figures 8B and 8C illustrate two alternative procedures for steps H024 and H026. In these procedures, the mobile node sends only one message, instead of two. In the procedure shown in Figure 8B, the MN sends its updated mobility binding information to the old IU1 in step H024'. In step H026', the old IU1 informs the TPC about the successful handover. In the procedure shown in Figure 8C, the MN directly informs the TPC/MMU about the successful handover in step H024". In step H026" the TPC sends the MN's updated mobility binding information to the old IU1.

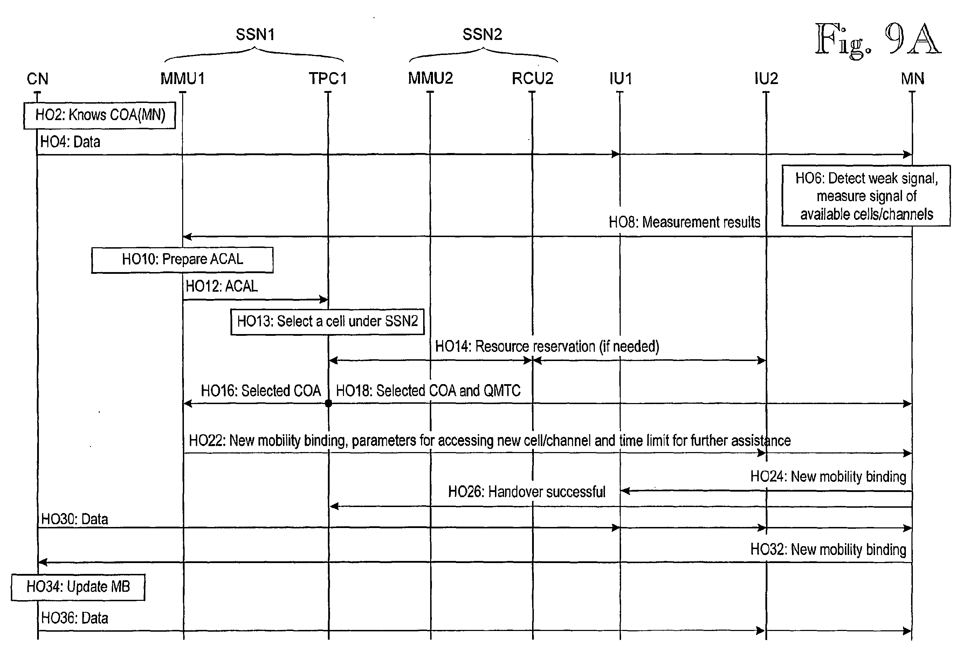

Figures 9A to 9C illustrate a handover in which the traffic controller changes, or an inter-SSN handover. Figure 9A illustrates the first phase of an inter-SSN handover, which is very similar to the intra-SSN handover as described in Figures 8A to 8C. Suffixes "1" and "2" again refer to the MN's old and new supporting elements, respectively. Steps H02 to H012 have been described in connection with Figure 8A. In step H013, the TPC1 recognizes that no cell under it can adequately support the MN. Based on the measurement results, subscriber preferences, operator policies and resource availability, the TPC1 selects a new cell which is under SSN2. The remaining steps of Figure 9A are similar to those of Figures 8A to 8C.

Figure 9B illustrates a case in which a new session between the mobile node MN and a second correspondent node CN2 is to be established before the inter-SSN handover is completed. The steps shown in Figure 9B follow logically the steps shown in Figure 9A. In step H050, the CN2 knows the MN's home address only. Accordingly, the first data packet is routed the MN's home agent HA. The MN's COA stored in the HA is the COA of SSN1, which is where the data is routed in step H054. In step H056, the TPC1 makes the traffic distribution decisions, considering the preferences, policies, etc. In step H058, resource reservations are made, if necessary. In step H060, the MN is paged, if necessary. In step H062, the data is conveyed via the new IU2 to the MN. In step H064, the MN sends a mobility binding update message to the CN which updates the mobility binding in step H066. In step H068, the CN is able to send data directly (ie bypassing TPC nodes) to the MN.

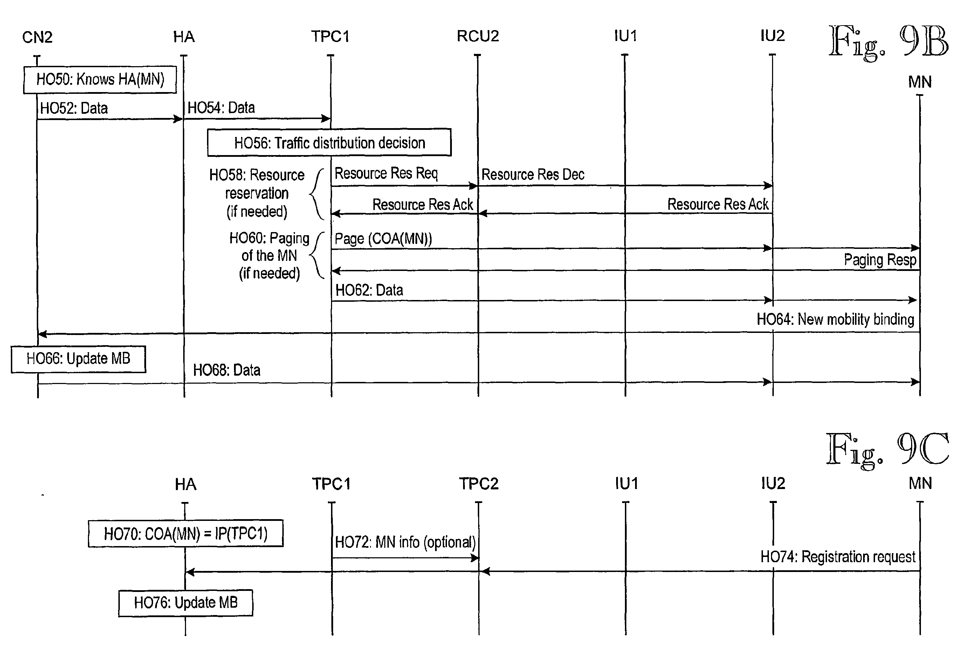

Figure 9C illustrates the steps in which the MN registers with the new SSN and its home agent. Before updating the MN's mobility binding, the HA routes traffic from the CN via the old SSN. The old SSN supports the MN for a limited period after handover. During this period, the old SSN maintains a route between itself and the MN's new IU (by using label switching or the like). The MN has to register with the new SSN and its HA until the support period expires, because after the period expires, the old SSN no longer supports the MN. It drops any packets to this MN. In step H070, the MN's COA in the HA indicates the old TPC1. In an optional step H072, the TPC1 sends subscriber-related information to the TPC2. In step H074, the MN sends a registration request to TPC2, which conveys the registration request to the HA. In step H076, the HA updates the MNs' mobility binding.

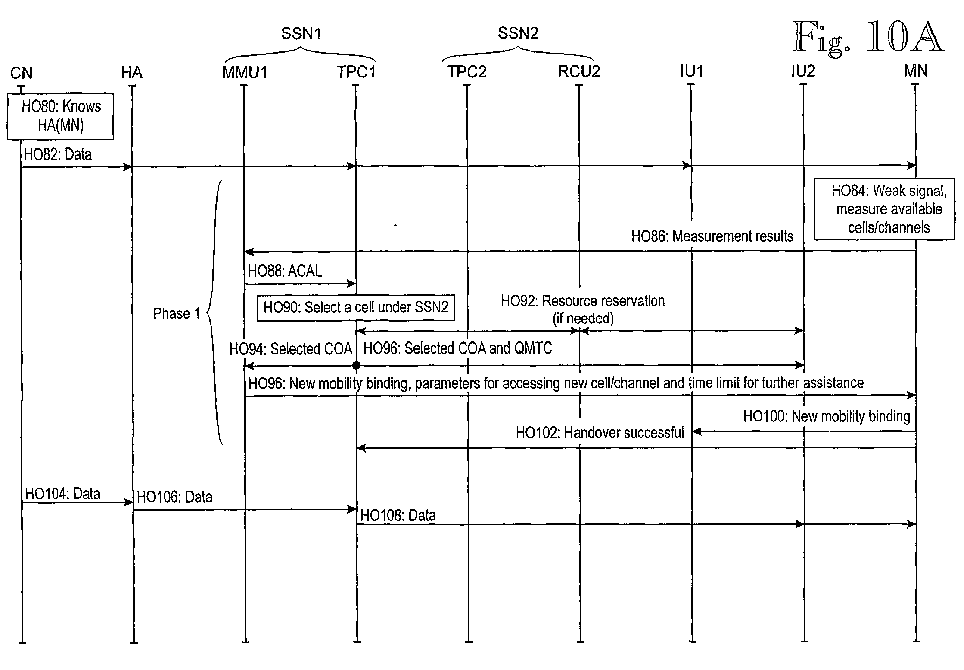

Figure 10A illustrates a special case in which the MN does not register its updated mobility binding with the CN during the entire session. In step H080, the CN knows the MN's home agent HA. In step H082, CN sends a data packet to the HA. The HA routes the packet via TPC1 which routes it via the old IU1 to the MN. In step H084, the mobile node MN detects a weak signal and measures the signal quality of the neighbouring cells. In step H086, the MN sends the measurement results to the MMU1. In step H088, the MMU1 decides which cell/channel combinations are acceptable and prepares the ACAL list, which it sends to the TPC1. In step H090, the TPC1 recognizes that no cell under it can adequately support the MN and selects a new cell under SSN2. In step H092, resource reservation is performed, if necessary (cf. steps SS10 to SS16 in Figure 7). In step H094, the TPC1 reports the selected COA to the MMU1. In step H096, the TPC1 sends the MN the selected COA, the necessary parameters for accessing the new cell/channel combination and the time limit for registering the updated mobility binding. In step H0100, the MN sends its updated mobility binding information to the old IU1, and in step H0102, the MN reports the successful handover to the TPC (cf. steps H024 and H026 in Figure 8A). In step HO104, the CN sends the next MN-terminated data packet. It is routed to the HA because the CN still only knows the address of the HA. In step H0106, the HA routes the packet to TPC1 which routes to the MN in step H0108.

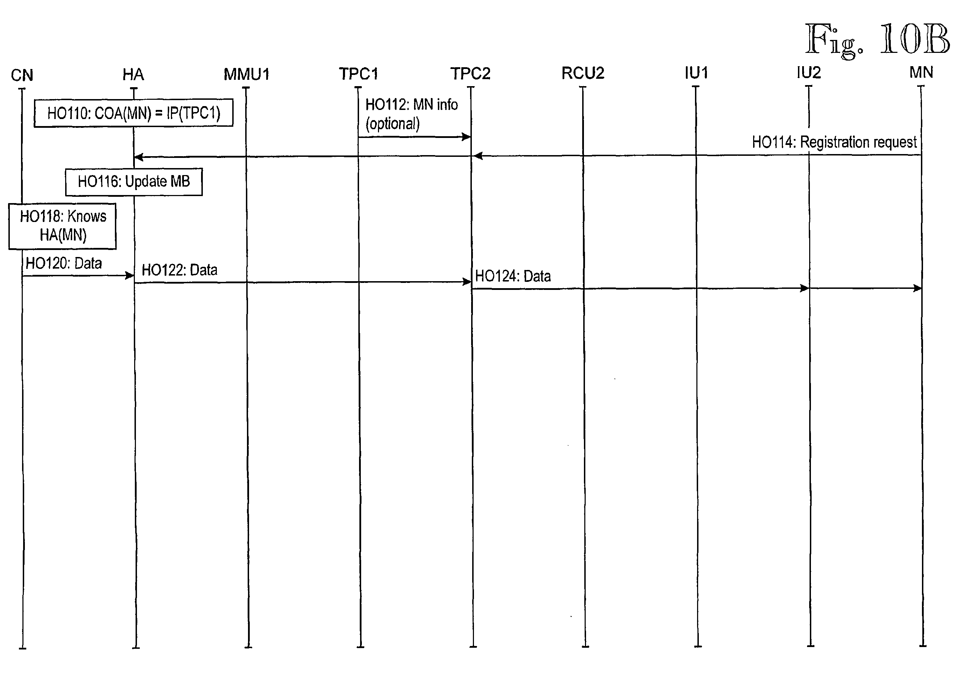

Figure 10B illustrates the final steps of an inter-SSN handover. In step H0110, the MN's COA stored in the HA indicates TPC1. In an optional step H0112, the TPC1 sends subscriber-related information to the TPC2. In step H0114, the MN sends a registration request to TPC2, which conveys the registration request to the HA. In step H0116, the HA updates the MNs' mobility binding. In step H0118, the CN still knows only the MN's HA address, to which it sends a data packet in step H0120. Because the HA updated the MN's mobility binding in step H0116, it routes the packet to TPC2 in step H0122. In step H0124, the TPC2 routes the packet to the MN.

### Acronyms (some are not official):

ACAL: Available Care-of Address List
AIU: Aggregate Interface Unit
APL: Access Permission List
BB: Backbone Network
BG: Border Gateway
BN: Bearer Network
BR: Broadcast Router
CN: Correspondent Node
CAT/CMT: Channel Allocation/Mapping Table
COA: Care-Of Addresses
DL: Downlink
DxB: DAB or DVB
FW: Firewall
HA: Home Agent
HAN: Home Administration Node(s)
HRU: Home Register Unit
IP: Internet Protocol
IU: Interface Units
MAC: MBN Authentication Centre
MB: Mobility Binding
MBN: Multi-Bearer Network
MBN_TC: MBN Traffic Class
MHA: MBN Home Agent
MIN: MBN Interface Number
MMU: Mobility Management Unit
MN: Mobile Node
PDP: Packet Data Protocol
QMTC: QoS to MBN_TPC
QoS: Quality of Service
RMU: Resource Management Unit
SSN: Service Support Nodes
THPT: Traffic Handling Policy Table
TPC: Traffic Policy Controller
UL: Uplink

### Reference:

1. MEMO network documentation (collectively referred to as the "MEMO concept"), available at http://memo.lboro.ac.uk

## Claims

1. A method for handing over a mobile node (MN) from an old cell to a new cell in a multi-bearer-type network, or MBN, the MBN comprising at least one uplink bearer network (GSM, GPRS, UMTS) and at least one downlink bearer network (DxB) comprising several cells and channels;
the method comprising
sending (HO8) measurement results of the mobile node's serving cell and neighbouring cells to a service support node set, or SSN;
maintaining resource availability data (RR12, HO8) and making resource reservation commands (SS12) concerning at least one downlink bearer network;
**characterized by**
preparing a list of available care-of addresses combining said measurement results, traffic policy information, subscriber preference information (QMTC) and resource availability data;
using (HO10), in the SSN, said measurement results and resource availability data (RR12) for forming a routing table (ACAL), wherein the routing table lists, in a priority order, alternative available care-of addresses in each available downlink bearer, cell or channel, and using the routing table for updating the mobile node's mobility binding information;
sending (H022) from the SSN to the mobile node said updated mobility binding information and parameters for accessing a new cell/channel combination;
sending (H032) from the mobile node said updated mobility binding information to the correspondent node (CN);
whereby the correspondent node (CN) is able to bypass the SSN node set when sending (H036) subsequent data packets to the mobile node (MN).

2. A method according to claim 1, **characterized in that** the first sending step (HO8) is responsive to detecting (H06) poor signal quality in the mobile node's old cell.

3. A method according to claim 1 or 2, **characterized by** the mobile node sending (H024) said updated mobility binding information to an interface unit (IU1) serving the old cell; and the mobile node informing (H026) the SSN about a successful handover.

4. A method according to claim 1 or 2, **characterized by** the mobile node sending (H024') said updated mobility binding information to an interface unit (IU1) serving the old cell; and the interface unit informing (H026') the SSN about a successful handover.

5. A method according to claim 1 or 2, **characterized by** the mobile node informing (H024") the SSN about a successful handover; and the SSN sending (H026") said updated mobility binding information to an interface unit (IU1) serving the old cell.

6. A method according to any one of the preceding claims, **characterized by** additionally using the mobile node's subscriber preference information (QMTC) and the MBN's traffic policy information (THPT) for forming the routing table (ACAL).

7. A method according to any one of the preceding claims, c h a r-acterized by a resource reservation step (H014) in the new cell.

8. A method according to claim 7, **characterized in that** the resource reservation step (H014) is responsive to a positive determination that the resource reservation step is necessary.

9. A method according to claim 7, **characterized in that** the reservation step is carried out if the data packet relates to guaranteed service.

10. A method according to any one of the preceding claims, c h a r-acterized by detecting that the new cell is controlled by a second SSN which is different from the first SSN which controls the old cell; and temporarily routing (HO52, H060) data via the first SSN.

11. A service support node set, or SSN, for a multi-bearer network, or MBN, to route data packets (DP) to a mobile node (MN) from its correspondent node (CN), the MBN comprising at least one uplink bearer network (GSM, GPRS, UMTS) and at least one downlink bearer network (DxB) comprising several cells and channels; the SSN comprising:
means for receiving (HO8) measurement results of the mobile node's serving cell and neighbouring cells;
means for receiving subscriber preference information (QMTC) related to the mobile node;
a mobility management unit (MMU) for centralized mobility management of the mobile node within the at least one downlink bearer network (DxB);
**characterized by**
means (TPC, RCU, MMU) for maintaining resource availability data (RR12, HO8) and making resource reservation commands (SS12) concerning said at least one downlink bearer network (DxB);
means (TPC) for repeatedly combining traffic policy information (THPT), said subscriber preference information (QMTC) and said resource availability data (RR12, HO8) into a routing table (ACAL), wherein the routing table lists, in a priority order, alternative available care-of addresses in each available downlink bearer, cell or channel, and means for using the routing table for updating the mobile node's mobility binding information;
means for sending (H022) to the mobile node said updated mobility binding information and parameters for accessing a new cell/channel combination; and
means for assisting the mobile node (MN) to select a new cell and to perform a handover from an old cell to a new cell in response to a positive determination that the new cell provides better signal quality, wherein said assisting comprises making a cell and/or channel decision on the basis of the routing table.

12. A service support node set, or SSN, according to claim 11, **characterized by**:
means for determining that the new cell is controlled by a second, different, SSN (SSN2); and means for handing over the mobile node (MN) to the second SSN, and
means for temporarily routing (HO52, H060) data to the mobile node via the first SSN.

## Patentansprüche

1. Verfahren zum Übergeben eines Mobilknotens (MN) von einer alten Zelle zu einer neuen Zelle in einem Mehr-Träger-Typ-Netzwerk, oder MBN, wobei das MBN wenigsten ein Uplink-Träger-Netzwerk (GSM, GPRS, UMTS) und wenigstens ein Downlink-Träger-Netzwerk (DxB) umfasst, das verschiedene Zellen und Kanäle umfasst; wobei
das Verfahren umfasst:
Senden (HO8) von Messergebnissen der Zelle, die den Mobilknoten bedient, und benachbarter Zellen an einen Dienst-Unterstützungs-Knotensatz, oder SSN;
Unterhalten von Ressourcen-Verfügbarkeitsdaten (RR12, HO8) und Erstellen von Ressourcen-Reservierungsbefehlen (SS12), die wenigstens ein Downling-Träger-Netzwerk betreffen;
**gekennzeichnet durch:**
Erstellen einer Liste von verfügbaren Care-of-Adressen, die die Messergebnisse, Verkehrsrichtlinien-Information, Teilnehmer-vorzug-Information und Ressourcen-Verfügbarkeitsdaten kombiniert;
Verwenden (HO10), in dem SSN, der Messergebnisse und Ressourcen-Verfügbarkeitsdaten (RR12) zum Bilden einer Routingtabelle (ACAL), wobei die Routingtabelle, in einer Prioritätsreihenfolge, alternativ verfügbare Care-of-Adressen in jedem verfügbaren Downlink-Träger, Zelle oder Kanal listet und Verwenden der Routingtabelle zum Aktualisieren der Mobilitätsbindungsinformation des Mobilknotens;
Senden (HO22) von dem SSN zum dem Mobilknoten der aktualisierten Mobilitätsbindungsinformation und von Parametern zum Zugreifen auf eine neue Zellen/Kanalkombination;
Senden (HO32) der aktualisierten Mobilitätsbindungsinformation von dem Mobilknoten zu dem Korrespondenzknoten (CN);
womit der Korrespondensknoten (CN) in der Lage ist den SSN-Knotensatz zu umgehen, wenn nachfolgende Datenpakte zu dem Mobilknoten (MN) gesendet werden. (HO36).

2. Verfahren nach Anspruch 1, **dadurch gekennzeichnet, dass** der erste Sendeschritt (HO8) auf das Erkennen (H06) schlechter Signalqualität in der alten Zelle des Mobilknotens anspricht.

3. Verfahren nach Anspruch 1 oder 2, **dadurch gekennzeichnet, dass** der Mobilknoten die aktualisierte Mobilitatsbindungsinformation an eine Schnittstelleneinheit (IU1) sendet (HO24), die die alte Zelle bedient; und der Mobilknoten das SSN über eine erfolgreiche Übergabe informiert (H026).

4. Verfahren nach Anspruch 1 oder 2, **dadurch gekennzeichnet, dass** der Mobilknoten die aktualisierte Mobilitätsbindungsinformation an eine Schnittstelleneinheit (IU1) sendet (HO24'), die die alte Zelle bedient; und die Schnittstelleneinheit das SSN über eine erfolgreiche Übergabe informiert (HO26').

5. Verfahren nach Anspruch 1 oder 2, **dadurch gekennzeichnet, dass** der Mobilknoten das SSN über eine erfolgreiche Übergabe informiert (HO24''); und das SSN die aktualisierte Mobilitätsbindungsinformation an eine Schnittstelleneinheit (IU1) sendet (HO26"), die die alte Zelle bedient.

6. Verfahren nach einem der vorhergehenden Ansprüche, **gekennzeichnet durch** zusätzliches Verwenden der Teilnehmer-Vorzug-Information (QMTC) des Mobilknotens und der Verkehrsrichtlinien-Information des MBN zum Bilden der Routingtabelle (ACAL).

7. Verfahren nach einem der vorhergehenden Ansprüche, **gekennzeichnet durch** einen Ressourcen-Reservierungssohritt (HO14) in der neuen Zelle.

8. Verfahren nach Anspruch 7, **dadurch gekennzeichnet, dass** der Ressourcen-Reservierungsschritt (HO14) auf eine positive Bestimmung, dass der Ressourcen-Reservierungaschritt notwendig ist, anspricht.

9. Verfahren nach Anspruch 7, **dadurch gekennzeichnet, dass** der Reservierungsschritt ausgeführt wird, wenn sich das Datenpaket auf einen garantierten Dienst bezieht.

10. Verfahren nach einem der vorhergehenden Ansprüche, **gekennzeichnet durch** Erkennen, dass die neue Zelle **durch** ein zweites SSN gesteuert wird, das von dem ersten SSN verschieden ist, das die alte Zelle steuert: und vorübergehendes Routen (HO52; HO60) von Daten über das erste SSN.

11. Dienst-Unterstützungs-Knotensatz, oder SSN, für ein Mehr-Träger-Netswerk, oder MBN, um Datenpakete (DP) zu einem Mobilknoten (MN) von seinem Korrespondenzknoten (CN) zu routen, wobei das MBN wenigstens ein uplink-Träger-Netzwerk (GSM, GPRS, UMTS) und wenigstens ein Downlink-Träger-Netzwerk (DxB) umfasst, das verschiedene Zellen und Kanäle umfasst; wobei das SSN umfasst:
ein Mittel zum Empfangen (H08) von Messergebnissen der Zelle, die den Mobilknoten bedient, und von benachbarten zellen;
ein Mittel zum Empfangen von Teilnehmer-Vorzug-Information (QMTC) die sich auf den Mobilknoten bezieht;
eine Mobilitäts-Verwaltungs-Einheit (MMU) zur zentralisierten Mobilitätsverwaltung des Mobilknotens innerhalb des wenigstens einen Downlink-Träger-Netswerks (DxB) ;
**gekennzeichnet durch**:
ein Mittel (TPC, RCU, MMU) zum Unterhalten von Ressourcen-Verfügbarkeitsdaten (RR12, HO8) und Erstellen von Ressourcen-Reservierungsbefehlen (SS12), die wenigstens ein Downlink-Träger-Netzwerk (DxB) betreffen ;
ein Mittel (TPC) zum wiederholten Kombinieren von Verkehrsrichtlinien-Information (THPT), der Teilnehmer-Vorzug-Information (QMTC) und der Ressourcen-Verfügbarkeitsdaten (RR12, HO8) in einer Routingtabelle (ACAL), wobei die Routingtabelle, in einer Prioritätsreihenfolge, alternativ verfügbare Care-of-Adressen in jedem verfügbaren Downlink-Träger, Zelle oder Kanal listet und ein Mittel zum Verwenden der Routingtabelle zum Aktualisieren der Mobilitätsbindungsinformation des Mobilknotens;
ein Mittel zum Senden (HO22) an den Mobilknoten der aktualisierten Mobilitätsbindungsinformation und Parameter zum Zugreifen auf eine neue Zellen/Kanalkombination; und
ein Mittel zum Unterstützen des Mobilknotens (MN) beim Auswählen einer neuen Zelle und Ausführen einer Übergabe von einer alten Zelle zu einer neuen Zellen in Reaktion auf eine positive Bestimmung, dass die neue Zelle eine bessere Signalqualität bereitstellt, wobei das Unterstützen das Erstellen einer zell- und/oder Kanalentscheidung, basierend auf der Routingtabelle, umfasst.

12. Dienst-Unterstützungs-Knotensatz, oder SSN, nach Anspruch 11, **gekennzeichnet durch**:
ein Mittel zum Bestimmen, dass die neue Zelle **durch** ein zweites, unterschiedliches SSN (SSN2) gesteuert wird; und ein Mittel zum Übergeben des Mobilknotens (MN) an das zweite SSN, und
ein Mittel zum vorübergehenden Routen (HO52, HO60) von Daten zu dem Mobilknoten über das erste SSN.

## Revendications

1. Procédé de transfert sur un noeud mobile (MN) d'une ancienne cellule à une nouvelle cellule dans un réseau de type à supports multiples, ou MBN, le MBN comprenant au moins un réseau de support de liaison montante (GSM, GPRS, UMTS) et au moins un réseau de support de liaison descendante (DxB) comprenant plusieurs cellules et canaux ;
le procédé comprenant les étapes consistant à :
envoyer les résultats de mesure (HO8) de la cellule de desserte du noeud mobile et des cellules voisines à un ensemble de noeuds de support de services, ou SSN ;
maintenir des données de disponibilité de ressources (RR12, HO8) et effectuer des commandes de réservation de ressources (SS12) concernant au moins un réseau de support de liaison descendante ;
**caractérisé par** les étapes consistant à :
préparer une liste des adresses temporaires disponibles combinant lesdits résultats de mesure, les informations de stratégie de trafic, les informations de préférences d'abonnés (QMTC) et les données de disponibilité de ressources ;
utiliser (HO10), dans le SSN, lesdits résultats de mesure et lesdites données de disponibilité de ressources (RR12) pour former un tableau d'acheminement (ACAL), dans lequel le tableau d'acheminement liste, par ordre de priorité, les adresses temporaires disponibles alternatives dans chaque support, cellule ou canal de liaison descendante disponible, et utiliser le tableau d'acheminement pour actualiser les informations de liaison de mobilité de noeud mobile ;
envoyer (HO22) du SSN au noeud mobile lesdites informations actualisées de liaison de mobilité et les paramètres d'accès à une nouvelle combinaison de cellule et de canal ;
envoyer (HO32) du noeud mobile lesdites informations de liaison de mobilité actualisées au noeud correspondant (CN) ;
moyennant quoi le noeud correspondant (CN) est capable de dériver l'ensemble de noeuds SSN en envoyant (HO36) des paquets de données ultérieurs au noeud mobile (MN).

2. Procédé selon la revendication 1, **caractérisé en ce que** la première étape d'envoi (HO8) réagit à la détection (H06) d'une mauvaise qualité de signal dans l'ancienne cellule du noeud mobile.

3. Procédé selon la revendication 1 ou 2, **caractérisé en ce que** le noeud mobile envoie (H024) lesdites informations de liaison de mobilité actualisées à une unité d'interface (IU1) desservant l'ancienne cellule; et en ce le noeud mobile informe (H026) le SSN d'un transfert réussi.

4. Procédé selon la revendication 1 ou 2, **caractérisé en ce que** le noeud mobile envoie (HO24') lesdites informations de liaison de mobilité actualisées à une unité d'interface (IU1) desservant l'ancienne cellule ; et **en ce que** l'unité d'interface informe (HO26') le SSN d'un transfert réussi.

5. Procédé selon la revendication 1 ou 2, **caractérisé en ce que** le noeud mobile informe (H024') le SSN d'un transfert réussi ; et **en ce que** le SSN envoie (H026") lesdites informations de liaison de mobilité actualisées à une unité d'interface (IU1) desservant l'ancienne cellule.

6. Procédé selon l'une quelconque des revendications précédentes, **caractérisé par** l'utilisation complémentaire des informations de préférences d'abonnés du noeud mobile (QMTC) et des informations de stratégie de transfert (THPT) du MBN pour former le tableau d'acheminement (ACAL).

7. Procédé selon l'une quelconque des revendications précédentes, **caractérisé par** une étape de réservation de ressources (HO14) dans la nouvelle cellule.

8. Procédé selon la revendication 7, **caractérisé en ce que** l'étape de réservation de ressources (HO14) réagit à une détermination positive que l'étape de réservation de ressources est nécessaire.

9. Procédé selon la revendication 7, **caractérisé en ce que** l'étape de réservation est effectuée si le paquet de données concerne un service garanti.

10. Procédé selon l'une quelconque des revendications précédentes, **caractérisé par** l'étape consistant à détecter que la nouvelle cellule est contrôlée par un deuxième SSN qui est différent du premier SSN qui contrôle l'ancienne cellule ; et par l'étape consistant à acheminer temporairement (H052, HO60) les données par l'intermédiaire du premier SSN.

11. Ensemble de noeuds de support de service, ou SSN, pour un réseau à plusieurs supports, ou MBN, pour acheminer des paquets de données (DP) à un noeud mobile (MN) à partir de son noeud correspondant (CN), le MBN comprenant au moins un réseau de support de liaison montante (GSM, GPRS, UMTS) et au moins un réseau de support de liaison descendante (DxB) comprenant plusieurs cellules et canaux ; le SSN comprenant :
des moyens pour recevoir (HO8) des résultats de mesure de la cellule de desserte du noeud mobile et des cellules voisines ;
des moyens pour recevoir des informations de préférences d'abonnés (QMTC) concernant le noeud mobile ;
une unité de gestion de mobilité (MMU) pour la gestion centralisée de mobilité du noeud mobile à l'intérieur du au moins un réseau de support de liaison descendante (DxB) ;
**caractérisé par** :
des moyens (TPC, RCU, MMU) pour maintenir des données de disponibilité de ressources (RR12, HO8) et effectuer des commandes de réservation de ressources (SS12) concernant ledit au moins un réseau de support de liaison descendante (DxB) ;
des moyens (TPC) pour combiner de manière répétitive des informations de stratégie de trafic (THPT), lesdites informations de préférences d'abonnés (QMTC) et lesdites données de disponibilité de ressources (RR12, HO8) dans un tableau d'acheminement (ACAL), dans lequel le tableau d'acheminement liste, par ordre de priorité, les adresses temporaires disponibles alternatives dans chaque support, cellule ou canal de liaison descendante disponible, et des moyens pour utiliser le tableau d'acheminement pour actualiser les informations de liaison de mobilité du noeud mobile ;
des moyens pour envoyer (HO22) au noeud mobile lesdites informations de liaison de mobilité actualisées et lesdits paramètres pour accéder à une nouvelle combinaison de cellule et de canal ; et
des moyens pour aider le noeud mobile (MN) à sélectionner une nouvelle cellule et pour effectuer un transfert d'une ancienne cellule à une nouvelle cellule en réponse une détermination positive que la nouvelle cellule fournit une meilleure qualité de signal, dans lequel ladite assistance comprend la prise d'une décision de cellule et/ou de canal sur la base du tableau d'acheminement.

12. Ensemble de noeuds de support de services, ou SSN, selon la revendication 11, **caractérisé par** :
des moyens pour déterminer que la nouvelle cellule est contrôlée par un deuxième SSN différent (SSN2) ; et des moyens pour transférer le noeud mobile (MN) au deuxième SSN, et
des moyens pour acheminer temporairement (HO52, HO60) des données au noeud mobile par l'intermédiaire du premier SSN.
